# EUROPÄISCHE PATENTSCHRIFT

(11) **EP 0 610 776 B1**
(45) Veröffentlichungstag und Bekanntmachung des Hinweises auf die Patenterteilung: **19.08.1998**
(21) Anmeldenummer: 94101443.3
(22) Anmeldetag: 01.02.1994
(51) Int. Cl.: G11B 23/107, B29C 65/08, B29C 65/00

(54) **Kassette für bandförmige Aufzeichnungsträger**
Cassette for record carrier in the form of a tape
Cassette pour support d'enregistrement en forme de bande

(30) Priorität: 11.02.1993 DE 9301906 U
(43) Veröffentlichungstag der Anmeldung: 17.08.1994
(73) Patentinhaber: EMTEC Magnetics GmbH, 67059 Ludwigshafen (DE)
(72) Erfinder: Klammer, Wolfgang, D-77799 Ortenberg (DE); Pavelka, Bozidar, D-77731 Willstaett (DE); Schoettle, Klaus, F-67100 Strasbourg (FR)

(56) Entgegenhaltungen:
- DE-A- 4 126 903
- 'Fügen von formteilen und halbzeugen aus thermoplastischen kunststoffen mit ultraschall' 1985 , ZENTRALVERBAND DER ELEKTROTECHNISCHEN INDUSTRIE , FRANKFURT * Seite 44; Abbildung 2 * * Seite 47; Abbildung 2 * * Seite 48; Abbildung 3 * * Seite 51; Abbildung 3 *
- PLASTVERARBEITER, Bd.34, Nr.9, 1983, SPEYER/RHEIN DE Seiten 798 - 800 LAND 'Einfluss der fügenhaltgestaltung auf das schweissverhalten'

## Beschreibung

Die Erfindung betrifft eine Kassette für bandförmige Aufzeichnungsträger, insbesondere eine Einspulen-Kassette, mit einem Kunststoff-Gehäuse, bestehend aus wenigstens zwei Gehäuseteilen mit Boden- und Deckel- und Seitenwänden, wobei zumindest die Seitenwände miteinander verschweißt sind.

Eine Magnetbandkassette für Datenanwendungen ist bekannt, bei der Ober- und Unterteil des Gehäuses durch Ultraschallschweißen miteinander verbunden sind. Die Verschweißung erfolgte dabei mittels sogenannter Energierichtungsgeber, die als dreiecksförmige Rippen geringer Höhe auf einer der Schweißflächen vorgesehen sind, sich jedoch spritzgußtechnisch nur schwierig in reproduzierbarer Höhe herstellen lassen. Schlecht ausgeformte Energierichtungsgeber bewirkten Inhomogenitäten der Schweißstellen, so daß schlechte oder gar keine Verschweißung erfolgte. Darüber hinaus kann Schweißstaub in den Kassettenraum eindringen.

Flüssigkeits- und/oder gasdichte Behälter besitzen eine über Quetschkanten-Ultraschallverschweißung realisierte Verbindung der Gehäuseteile. Diese Art der Schweißverbindung gleicht Unebenheiten und Abweichungen der Schweißgeometrie von der Idealgeometrie des herzustellenden Behälters eher aus. Wenn sich die Quetschkanten-Kontaktflächen berühren, tritt ebenso Schweißstaub auf, der bei einer Kassette zur Funktionsbeeinträchtigung beim Betrieb führen kann.

Der Erfindung liegt die Aufgabe zugrunde, eine gegenüber den bekannten Ausführungen verbesserte Kassette bereitzustellen.

Die DE-A 41 26 903 beschreibt eine Videokassette mit zwei nebeneinander liegenden Spulen und zwei durch Schweißen miteinander verbundenen Gehäusehälften. Die Schweißverbindungen beschränken sich auf 3 wenigstens teilzylindrische Vorsprünge und entsprechende teilhohlzylindrische Ausnehmungen, die Maßnahmen zur Aufnahme des Schweißstaubs enthalten.

Obwohl eine Vorsprungs/Ausnehmungs-Schweißstelle auch in der Seitenwand vorgesehen sein kann, ergibt sich insgesamt eine im Hinblick auf Festigkeit und Bruchsicherheit höchstens geringe Verbesserung bei unveränderter Möglichkeit des Staubeindringens von außen in das Kassettengehäuse.

Mit einer Kassette der eingangs definierten Art wird diese Aufgabe nach der vorliegenden Erfindung gemäß Anspruch 1 gelöst, wenn eine Feder-Nut-Ausbildung der zu verschweißenden Wände, insbesondere der Seitenwände, vorgesehen ist und die Feder-Nut-Bereiche der Wände nach dem Quetschkantenprinzip miteinander verschweißt sind.

Dadurch werden die oben diskutierten Probleme der bekannten Datenkassette vermieden und die Festigkeit der Schweißung wird erhöht durch die zusätzliche Abstützung des Schweißbereichs. Außerdem wird eine zusätzliche Zentrierung der zu verschweißenden Wände erreicht bei vollständiger Abkapselung des Gehäuseinnenraums gegen Schweißstaub. Daneben werden noch alle sichtbaren Schweißgutaustrittsstellen von vornherein vermieden.

In weiterer Ausgestaltung kann der Einführungsbereich des Nut-Teils der zu verschweißenden Wände mit abgerundeten Kanten ausgebildet sein, wodurch eine weichere Zusammenführung der Gehäuseteile erreicht wird zur Abriebsvermeidung.

Wenn der Feder-Teil der zu verschweißenden Wände mit einer Schrägfläche ausgebildet ist, läßt sich der Staubanfall zusätzlich stark einschränken.

Zweckmäßig können zusätzliche Auswerfererhöhungen an den Gehäuseteilen bei der Herstellung der Teile im Spritzguß eingespart werden, da dünnere Wandstärken infolge der stabileren Schweißung größere Entformungsschrägen ermöglichen.

Besonders günstig ist die Erfindung bei einer Einspulenkassette anwendbar, da diese speziellen sehr anspruchsvollen Bruchversuchen unterworfen werden.

In der Zeichnung sind Ausführungsbeispiele im Vergleich zum Stand der Technik dargestellt und nachfolgend beschrieben.

In der Zeichnung zeigt:
- Figur 1: einen Schnitt durch die erfindungsgemäße Außenwand einer Einspulen-Datenkassette nach Figur 5
- Figur 2: einen Schnitt durch die erfindungsgemäße Innenwand einer Einspulen-Datenkassette nach Figur 5
- Figur 3A, 3B: schematische Schnittdarstellungen durch eine Energierand-Schweißstelle gemäß Stand der Technik
- Figur 4A, 4B: schematische Schnittdarstellungen durch eine Quetschkanten-Schweißstelle gemäß Stand der Technik
- Figur 5: eine bekannte Datenkassette in geöffneter, perspektivischer Darstellung

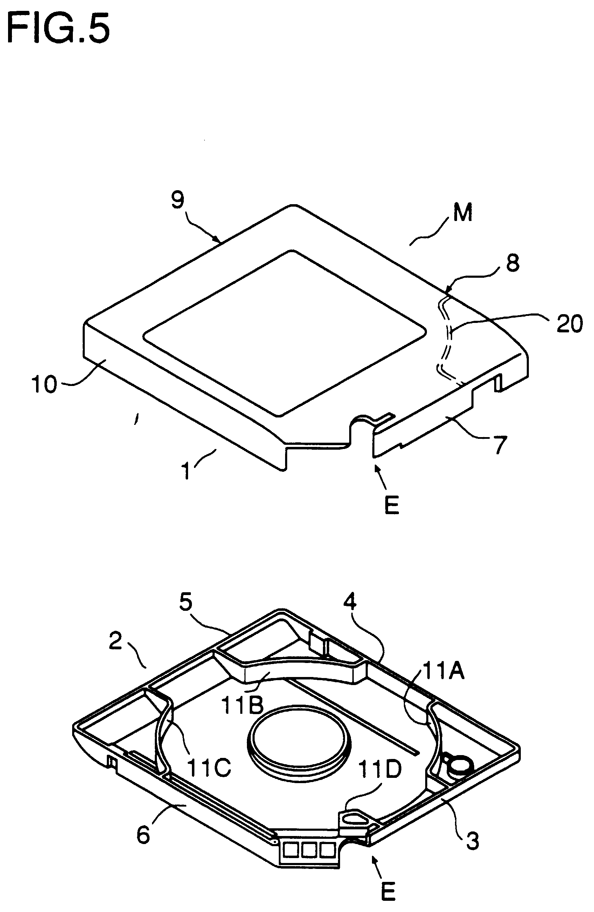

Figur 5 zeigt eine Magnetband-Datenkassette M als Gehäuse, bestehend aus den Boden- und Deckelteilen 2 und 1, die üblicherweise eine nicht dargestellte Spule mit einem aufgewickelten Magnetband (nicht dargestellt) enthält. Die äußeren Seitenwände 3 bis 6 des Bodenteils 2 werden mit entsprechenden Seitenwänden 7 bis 10 (einschließlich der beiden nicht sichtbaren Seitenwände 8 und 9) mittels Ultraschall (US) verschweißt.

Derartige Verschweißungen der Außenwände einer Kassette sind auch bei jedem anderen Kassettentyp mit Vorteil benutzbar.

Im Falle der vorliegenden Kassette M werden zusätzlich noch die Wandteile 11A - 11D des Innenrings mit den entsprechenden Wandteilen des Deckelteils 1 miteinander verschweißt.

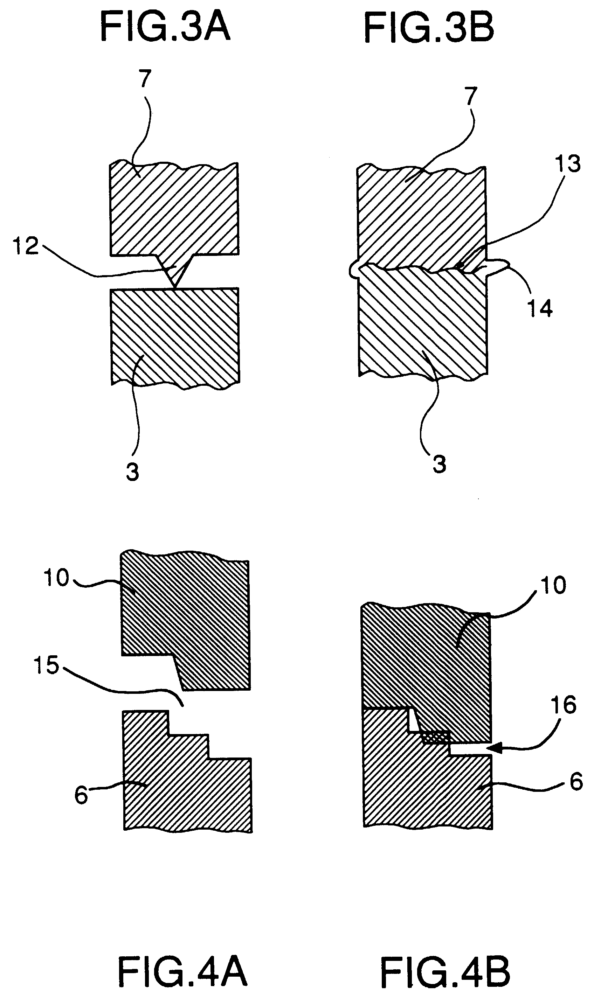

Figuren 3A und 3B zeigen die Energierand-Schweißstellen und Figuren 4A und 4B die Quetschkanten-Schweißstellen, jeweils vorher - nachher, in schematischer Darstellung.

Figur 3A zeigt den Energierand 12, z.B. an der äußeren Seitenwand 7 des Deckelteils 1, oder eines seiner nicht sichtbaren Wandteile des Innenrings. Das Gegenstück ist dann die äußere Seitenwand 3 des Bodenteils 2 oder eines der Innenringwandteile 11A - 11D.

Figur 3B zeigt den inhomogenen Querschnitt der Schweißstelle 13 und den Schweißgutaustritt jeweils nach dem Schweißvorgang.

In Figur 4A ist ein Quetschkanten-Profil 15 z.B. der äußeren Seitenwand 10 des Deckelteils 1 und der entsprechenden äußeren Seitenwand 6 des Bodenteils 2 vor dem Schweißvorgang und in Figur 4B danach dargestellt. Es ist deutlich, daß die Schweißstelle 16 von besserer Qualität und Festigkeit sein muß, jedoch sind die einander zugeordneten Flächen erheblich groß.

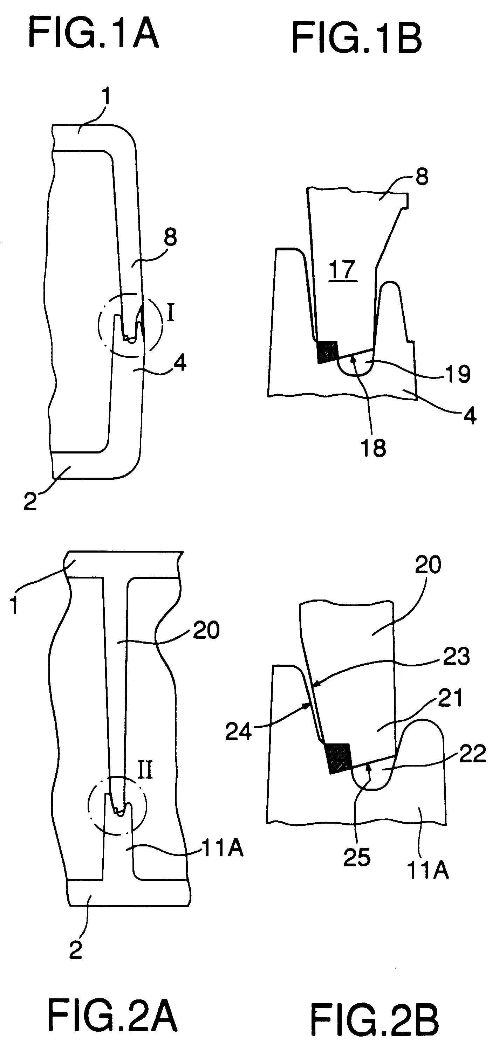

Figuren 1A und 1B zeigen nunmehr die erfindungsgemäßen Seitenwand-Ausführungen, im Schnitt durch eine der Seitenwände 3 bis 6 des Bodenteils 2 und die entsprechenden Seitenwände 7 bis 10 des Deckelteils 1. Bezeichnet sind beispielhaft die Seitenwände 4 und 8. Dabei zeigt Figur 1B den vergrößerten Ausschnitt I mit der Schweißverbindung der Figur 1A. Es ist deutlich erkennbar, daß an der Unterkante der Seitenwand 8 als Feder ein verjüngtes Teil 17 vorgesehen ist, das an seiner Stirnseite eine Schrägfläche 18 aufweist zur Verringerung des Abriebs. Teil 17 ist bereits in Schweißeingriff mit der Oberkante der Seitenwand 4, die als Nut eine abgestufte Rille 19 besitzt. Die Rillenwände im Einführungsbereich der Rille 19 sind abgerundet zur Vermeidung unnötigen Abriebs beim Zusammenführen der Feder-/Nutteile 17 und 19 ausgebildet.

Figuren 2A und 2B zeigen die entsprechenden Wandteil-Ausführungen der Innenring-Schweißverbindung.

Darin ist das Wandteil 11A des Bodenteils 2 mit dem gestrichelt im Deckelteil 1 eingezeichneten entsprechenden Wandteil 20 verbunden. Figur 2B zeigt den vergrößerten Ausschnitt II mit der Schweißverbindung der Figur 2A.

Das Wandteil 20 weist an seiner Unterkante ein keilförmig verjüngtes Teil 21 als Feder auf, das in eine Stufenrille 22 als Nut am Oberrand des Wandteils llA eingreift. Die Stirnfläche 25 ist abgeschrägt wie auch die Schrägflächen 23 und 24 der Teile 21 bzw. 22. Abrundungen sind wiederum besonders im Einführungsbereich der Rillenwände der Stufenrille 22 vorgesehen.

Es war praktisch nachweisbar, daß die Festigkeit und Bruchsicherheit der beschriebenen erfindungsgemäßen Kassettenwand-Verbindungen außerordentlich gut ist. Bei Kassetten M nach dem Stand der Technik wurden 95 von 100 Kassetten im Bruchversuch (Fall aus 2 Meter Höhe auf die Ecke E der Kassette M) zum Teil stark beschädigt. Schweißnähte der bekannten Kassette rissen an einer Stelle ein, und diese Risse setzten sich in den übrigen Schweißnähten fort. Mit den Kassetten nach der vorliegenden Erfindung ging die Beschädigungsrate bei 100 Kassetten im Bruchversuch auf Null zurück, was als enorme Verbesserung anzusehen ist. Außerdem vereinfachte sich die Fertigung der Spritzgußteile, die auch wirtschaftlicher herstellbar wurden, da durch die bessere Verschweißung eine Stabilitätserhöhung erzielt wurde, wodurch partielle Wandstärkenreduzierungen realisierbar wurden. Dadurch wurden Materialeinsparungen bis zu 6 % erreicht.

Eine aus wenigstens zwei Teilen bestehende Kassette für Aufzeichnungsträger zeichnet sich durch hohe Bruchsicherheit aus, wenn die zu verbindenden Wände der Teile mittels Quetschkantenverschweißung verbunden sind bei zusätzlicher Nut- und Feder-Ausbildung der Schweißbereiche.

Die Erfindung ist bei jeder Art von Kassetten für Aufzeichnungsträger, wie Magnetband-, Film-, Farbband- und anderen Kassetten, vorteilhaft benutzbar.

## Patentansprüche

1. Kassette für bandförmige Aufzeichnungsträger, insbesondere Einspulen-Kassette für die Datenaufzeichnung. mit einem Kunststoff-Gehäuse, bestehend aus wenigstens zwei Gehäuseteilen (1, 2) mit Boden- und Deckel- und Seitenwänden (3-6 und 7-10), wobei zumindest die Seitenwände miteinander verschweißt sind, dadurch gekennzeichnet, daß zur Erhöhung der Festigkeit und Bruchsicherheit des Gehäuses eine Feder/Nut-Ausbildung (17 u. 19, 21 u. 22) der zu verschweißenden Seitenwände (3-6 und 7-10) und gegebenenfalls der Innenwände 11A u. 20) vorgesehen ist und die Feder/Nut-Bereiche (17 u. 19, 21 u. 22) der zu verschweißendcn Seitenwände (3-6 u. 7-10) und gegebenenfalls der Innenwände 11A u. 20) nach dem Quetschkantenprinzip miteinander verschweißt sind.

2. Kassette nach Anspruch 1, dadurch gekennzeichnet, daß der Einführungsbereich des Nut-Teils (19, 22) der zu verschweißenden Wände (3-6, 7-10, 11A, 20) mit abgerundeten Kanten ausgebildet ist.

3. Kassette nach Anspruch 1 oder 2, dadurch gekennzeichnet, daß der Feder-Teil (17, 21) der zu verschweißenden Wände (3-6, 7-10, 11A, 20) mit einer Schrägfläche (18, 25) an der Stirnseite ausgebildet ist.

4. Kassette nach Anspruch 1 und einem oder mehreren der Ansprüche 2 und 3, dadurch gekennzeichnet, daß an den Gehäuseteilen (1, 2) keine zusätzlichen Auswerfererhöhungen vorhanden sind.

5. Kassette nach Anspruch 1 und einem oder mehreren der Ansprüche 2 bis 4, dadurch gekennzeichnet, daß die Kassette eine Einspulen-Magnetbandkassette (M) ist.

## Claims

1. A cartridge for recording media in tape form, in particular a single-reel cartridge for data recording, having a plastic housing, comprising at least two housing parts (1, 2) with bottom and top and side walls (3-6 and 7-10), at least the side walls being welded to one another, wherein, to increase the strength and fracture resistance of the housing, a tongue-and-groove formation (17 and 19, 21 and 22) of the side walls (3-6 and 7-10) to be welded, and, if appropriate, of the inner walls (11A and 20), is provided and the tongue-and-groove regions (17 and 19, 21 and 22) of the side walls (3-6 and 7-10) to be welded, and, if appropriate, of the inner walls (11A and 20), are welded to one another by the pinched-edge principle.

2. A cartridge as claimed in claim 1, wherein the insertion region of the groove part (19, 22) of the walls (3-6, 7-10, 11A, 20) to be welded is designed with rounded-off edges.

3. A cartridge as claimed in claim 1 or 2, wherein the tongue part (17, 21) of the walls (3-6, 7-10, 11A, 20) to be welded is designed with a beveled surface (18, 25) on the end face.

4. A cartridge as claimed in claim 1 and one or more of claims 2 and 3, wherein there are no additional ejector elevations on the housing parts (1, 2).

5. A cartridge as claimed in claim 1 and one or more of claims 2 to 4, wherein the cartridge is a single-reel magnetic tape cartridge (M).

## Revendications

1. Cassette pour supports d'enregistrement en forme de bande, en particulier cassette à une seule bobine pour l'enregistrement de données, comportant un boîtier en plastique constitué d'au moins deux parties (1, 2) avec parois de fond, de couvercle et latérales (3-6 et 7-10), au moins les parois latérales étant soudées entre elles, caractérisée par le fait que, pour une augmentation de la solidité et de la résistance à la rupture du boîtier, est prévue une configuration à languette et rainure (17 et 19, 21 et 22) des parois latérales à souder (3-6 et 7-10) et éventuellement des parois intérieures (11A et 20), et les zones à languette et rainure (17 et 19, 21 et 22) des parois latérales à souder (3-6 et 7-10) et éventuellement des parois intérieures (11A et 20) sont soudées entre elles suivant le principe du bord écrasé.

2. Cassette selon la revendication 1, caractérisée par le fait que la zone d'introduction de la partie rainure (19, 22) des parois à souder (3-6, 7-10, 11A, 20) a des arêtes arrondies.

3. Cassette selon l'une des revendications 1 et 2, caractérisée par le fait que la partie languette (17, 21) des parois à souder (3-6, 7-10, 11A, 20) a, sur son côté frontal, une surface oblique (18, 25).

4. Cassette selon la revendication 1 et l'une au moins des revendications 2 et 3, caractérisée par le fait qu'il n'y a pas d'élévations d'éjecteur supplémentaires sur les parties (1, 2) du boîtier.

5. Cassette selon la revendication 1 et une ou plusieurs des revendications 2 à 4, caractérisée par le fait que c'est une cassette de bande magnétique à une seule bobine (M).
